Europäisches Patentamt

European Patent Office

Office européen des brevets

(19)

(11) Veröffentlichungsnummer: **0 328 143**

**A1**

(12) **EUROPÄISCHE PATENTANMELDUNG**

(21) Anmeldenummer: 89102364.0

(22) Anmeldetag: 10.02.89

(51) Int. Cl.4: **F04B 43/06**

(30) Priorität: 10.02.88 DE 8801660 U

(43) Veröffentlichungstag der Anmeldung:
16.08.89 Patentblatt 89/33

(84) Benannte Vertragsstaaten:
AT BE CH DE ES FR GB IT LI NL SE

(71) Anmelder: Henkel, Wolfgang Eberhard
Ketscher Strasse 8
D-6832 Hockenheim (Am Luxhof)(DE)

Anmelder: ABEL-PUMPEN GMBH & CO. KG
Feldstrasse 10
D-2059 Büchen(DE)

Anmelder: Stapelfeldt, Volker, Dipl.-Ing.
Seekenkamp 19
D-2418 Ratzeburg(DE)

(72) Erfinder: Henkel, Wolfgang Eberhard
Ketscher Landstr. 8
D-6832 Hockenheim (Am Luxhof)(DE)
Erfinder: Stapelfeldt, Volker, Dipl.-Ing.
Seekenkamp 19
D-2418 Ratzeburg(DE)
Erfinder: Belling, Dietrich
Dammkoppel 5
D-2059 Büchen(DE)

(74) Vertreter: Dipl.-Ing. H. Hauck Dipl.-Ing. E.
Graalfs Dipl.-Ing. W. Wehnert Dr.-Ing. W.
Döring
Neuer Wall 41
D-2000 Hamburg 36(DE)

(54) Vorrichtung zur Steuerung des Hydraulikkreises einer Kolbenmembranpumpe.

(57) Vorrichtung zur Steuerung des Hydraulikkreises einer Kolbenmembranpumpe, die mindestens eine Pumpenmembran (4;22a,22b) aufweist, die abwechselnd dem Druck- oder dem Saughub eines motorisch angetriebenen Kolbens (26) ausgesetzt ist, mit einer Steuereinheit (37), die in Abhängigkeit von einer Leistungsanforderung oder dergleichen die Menge der vom Kolben (26) verdrängten Hydraulikflüssigkeit ändert, wobei der Membran auf der dem Hydraulikmedium zugekehrten Seite ein Wegaufnehmer (3;35a,35b) zugeordnet ist, der den Hubweg (x) der Membran (4) mißt und ein dem Hubweg entsprechendes Hubwegsignal erzeugt, das auf die Steuereinheit (37) gegeben wird, die Steuereinheit einen Speicher aufweist zur Speicherung vorgegebener Hubwerte und/oder Hubwertbereiche für vorgegebene hydraulische Leistungen der Pumpe, die Steuereinheit (37) das Hubwegsignal mit den vorgegebenen Hubwerten bzw. Hubwertbereichen (Sollwert bzw. Sollwertbereiche) vergleicht und ein Steuersignal erzeugt, wenn es für die vorgegebene Leistung von dem Sollwert bzw. Sollwertbereich abweicht und die Steuereinheit (37) nach Maßgabe des Steuersignals die Menge des Hydraulikmediums pro Zeiteinheit ändert und/oder ein Alarmsignal erzeugt.

# Fig. 1

## Vorrichtung zur Steuerung des Hydraulikkreises einer Kolbenmembranpumpe

Die Erfindung bezieht sich auf eine Vorrichtung zur Steuerung des Hydraulikkreises einer Kolbenmembranpumpe nach dem Oberbegriff des Patentanspruchs 1.

Bei einer Kolbenmembranpumpe wird eine elastische Pumpenmembran abwechselnd mit dem Druck- und dem Saughub eines motorisch angetriebenen Kolbens beaufschlagt, wodurch die Pumpenmembran ihrerseits Hubbewegungen ausführt, die zur Förderung eines fließfähigen Mediums verwendet wird. Die Membran, zum Beispiel eine Flachmembran, eine zylindrische Membran oder eine Topfmembran, kann mit einer festen flüssigkeitsdurchlässigen, eine Endlage der Membran bildenden Wand zusammenwirken oder ohne feste Endlagen betrieben werden. Es ist bekannt, die hydraulische Leistung derartiger Kolbenmembranpumpen zum Beispiel durch eine Drehzahlveränderung des den Kolben antreibenden Antriebs oder durch eine Änderng des Kolbenhubs zu steuern. Es ist ferner bekannt, Kolbenmembranpumpen mechanisch mittels federbelasteter Ventile zu regeln (DE-OS 33 41 020), die die Hydraulikmediummenge, die in ein Vorratsgefäß beim Druckhub abgegeben bzw. aus dem Vorratsgefäß beim Saughub entnommen wird, in Abhängigkeit vom Druck im Hydraulikkreis steuern.

Falls im Hydraulikkreis keine Verluste auftreten, gibt der Hub des Kolbens die verdrängte Flüssigkeitsmenge vor und damit auch den entsprechenden Hub der Membran. Im Normalbetrieb treten jedoch Verluste auf; beispielsweise können Verluste an der Kolbenstangendichtung und am Kolben auftreten. Daher führt eine Steuerung der hydraulischen Leistung über den Kolben nicht immer zum gewünschten Resultat. Außerdem besteht die Gefahr, daß bei Überfüllung durch Undichtigkeit der Membranhub zu groß wird. Die verwendeten Membranen lassen jedoch nur eine beschränkte Dehnung zu, andernfalls besteht die Gefahr, daß die Membran bricht. Ein Membranbruch muß nach Möglichkeit vermieden werden, weil er zum Ausfall der Pumpe führt und deren Instand setzung einen größeren Zeitraum erfordert. Es muß außerdem vermieden werden, daß eine Vermischung der Hydraulikflüssigkeit mit dem zu verpumpenden Medium stattfindet.

Der Erfindung liegt die Aufgabe zugrunde, eine Vorrichtung zur Steuerung des Hydraulikkreises einer Kolbenmembranpumpe zu schaffen, mit der die hydraulische Leistung der Pumpe unter Berücksichtigung des Membranhubes gesteuert und/oder der Membranhub auf maximale Dehnung überwacht werden kann.

Diese Aufgabe wird durch die Merkmale des Kennzeichnungsteils des Patentanspruchs 1 gelöst.

Bei der Vorrichtung nach der Erfindung ist der Membran auf der dem Hydraulikmedium zugewandten Seite ein Wegaufnehmer zugeordnet, der den Hubweg der Membran mißt und ein dem Hubweg entsprechendes Hubwegsignal erzeugt. Das Hubwegsignal bildet daher unmittelbar einen Indikator für die hydraulische Leistung der Membranpumpe. Diese ergibt sich aus der Anzahl der Membranhübe pro Zeiteinheit sowie aus dem jeweiligen Hubweg der Membran. Das Hubwegsignal wird in einer Steuereinheit mit einem vorgegebenen Hubwert ver glichen bzw. mit einem vorgegebenen Hubwertbereich für vorgegebene hydraulische Leistungen der Pumpe. Wie erwähnt, resultiert eine bestimmte hydraulische Leistung aus einem bestimmten Membranhub. Wird dieser bei einer bestimmten Leistungsanforderung nicht erreicht, ist es notwendig, den Membranhub nachzuregeln. Dies geschieht dadurch, daß in Abhängigkeit vom Steuersignal der Steuereinheit die Menge an Hydraulikmedium im Hydraulikkreislauf eingestellt wird. Ist zum Beispiel der Membranhub zu groß, muß die Hydraulikflüssigkeit in ihrer Menge verringert werden. Ist sie hingegen zu gering, muß Hydraulikflüssigkeit zugeführt werden. Auf diese Weise kann die Kolbenmembranpumpe auf eine konstante Leistung eingestellt werden.

In vielen Fällen findet die Membranpumpe einen Verbraucher vor, der während des Betriebes einen unterschiedlichen Gegendruck erzeugt, zum Beispiel eine Filterpresse, bei der nach und nach ein Druckanstieg auftritt. Der Ausgangsdruck bzw. die Leistung der Membranpumpe muß an die Gegendruckverhältnisse angepaßt werden. Dies um so mehr, als zum Beispiel bei Filterpressen eine bestimmte Druckkennlinie wünschenswert ist, um eine optimale Ausnutzung der Filterpresse zu erhalten. In der Steuereinheit kann daher eine derartige Kennlinie vorgegeben werden. Die Vorgabe erfolgt nach einer entsprechenden Umrechnung in vorgegebene Hubwerte, die bei vorgegebenen Gegendruckwerten gefahren werden müssen. Hierzu ist erforderlich, daß mit Hilfe einer geeigneten Druck- bzw. Differenzdruckmessung der Gegendruck ermittelt und in die Steuereinheit eingegeben wird.

Mit Hilfe des Wegaufnehmers kann auch ein maximaler Hub der Membran erfaßt werden und zur Erzeugung eines Alarmsignals führen, um eine Überdehnung der Membran und damit der Gefahr des Membranbruchs vorzubeugen.

Die erfindungsgemäße Steuervorrichtung ist für sämtliche Arten von Kolbenmembranpumpen geeignet. Sie ist jedoch besonders vorteilhaft für Kolbenmembranpumpen, bei denen der Kolben mit konstantem Hub und konstanter Frequenz betrieben wird und eine Steuerung durch das Hineinfördern in einen bzw. das Entnehmen aus einem Speicher regelt. Bei der Anwendung der erfindungsgemäßen Steuerung auf eine derartige Kolbenmembranpumpe werden steuerbare Ventile vorgesehen, über die die Zufuhr in den Speicher bzw. die Entnahme gezielt gesteuert wird, beispielsweise mit Hilfe von Magnetventilen, deren Öffnungszeit die in den Speicher abgegebene bzw. aus dem Speicher entnommene Flüssigkeitsmenge bestimmt.

Der Wegaufnehmer ist vorzugsweise elektrisch und vorzugsweise stationär angeordnet, während ein Initiator mit der Membran verbunden ist. Der Initiator kann nach einer Ausgestaltung der Erfindung innerhalb einer Hülse angeordnet werden, die ihrerseits an einer Wand angebracht ist, welche die Endlage der Membran bestimmt. Der Initiator ist innerhalb der Hülse an einem Bolzen oder dergleichen befestigt, der durch Federkraft der Membran folgt.

Es sind verschiedene elektrische Wegaufnehmer denkbar. Besonders vorteilhaft ist die Verwendung eines Hall-Generators, wobei der Initiator ein Magnet ist. Zur Sicherung der elektrischen Zuleitung für den elektrischen Wegaufnehmer kann die Halterung von einem rohrähnlichen Gehäuse gebildet sein, das den Sensor und die elektrische Zuleitung aufnimmt.

Die Erfindung wird nachfolgend anhand von Zeichnungen näher erläutert.

Fig. 1 zeigt schematisch den Schnitt durch das Gehäuse einer Membranpumpe mit einem Wegaufnehmer.

Fig. 2 zeigt ein Blockschaltbild einer Steuerung einer doppelt wirkenden Membranpumpe.

Eine Membranpumpe 11 weist ein Pumpengehäuse 12 auf, in dem eine zylindrische Membran 4 aus einem geeigneten Material eingespannt ist (die besondere Art der Befestigung wird nicht näher beschrieben, da sie an sich bekannt ist). Die Ruhestellung der Membran ist in durchgezogenen Linien dargestellt, während ihre maximale Auslenkung strichpunktiert gezeigt ist. Die Membran wird an der Innenseite durch ein zylindrisches gelochtes Rohr 4a abgestützt. Während des Förderhubs strömt eine Arbeitsflüssigkeit, zum Beispiel Wasser, in den inneren Membranraum 1 ein und bewirkt eine Ausdehnung A der Membran, wobei diese sich auswölbt (strichpunktierte Linie). Das zu fördernde Medium 14 wird so in den Kanal 15 gepumpt. Die für den Pumpvorgang notwendigen Ventile sind nicht dargestellt.

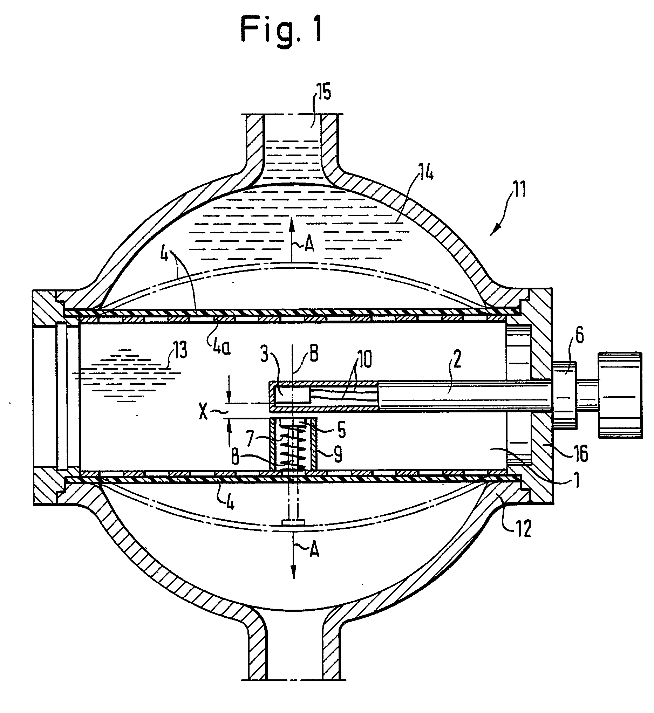

Im Falle eines Membranbruchs, der nicht rechtzeitig erkannt wird, und bei dem sich das zum Beispiel aggressive Fördermedium mit der Arbeitsflüssigkeit vermischen kann, müssen arbeitsintensive Wartungsmaßnahmen vorgenommen werden. Daher ist in Fig. 1 eine Vorrichtung vorgesehen, mit welcher die Ausdehnung der Membran 4 festgestellt wird.

In Fig. 1 ist vorzugsweise ein Flanschkopf 6 an einem Gehäusedeckel 16 befestigt. Durch den Deckel 16 erstreckt sich ein Rohr 2 in den Membranraum 1 hinein. Das Rohr 2 nimmt am freien Ende im Inneren einen Hall-Generator 3 auf. Dem Hall-Generator gegenüber ist ein Magnet 5 auf der gemeinsamen Achse B positioniert.

Der Magnet 5 ist mittels eines von einer Feder 7 umgebenen Achsbolzens 8 mit der Innenseite der Membran 4 in Verbindung. Der Achsbolzen 8, Feder 7 und der Magnet 5 sind dabei von einer Hülse umgeben, die von innen an dem Rohr 4 befestigt ist. Während der Membranbewegung verfährt somit der Magnet 5 entlang der Achse B, so daß sich eine ständige Änderung des Abstandes X zwischen Magnet 5 und Hall-Generator 3 ergibt. Unter Ausnutzung des Hall-Effekts wird somit eine ständige Differenzmessung des Abstandes X vorgenommen, wobei das hierdurch entstehende Spannungssignal über Signalkabel 10 im Rohr 2 nach außen geleitet werden kann. Es ist daher möglich, eine zuverlässige Bruchüberwachung zu erreichen, indem zum Beispiel eine Überdehnung der Membran festgestellt wird.

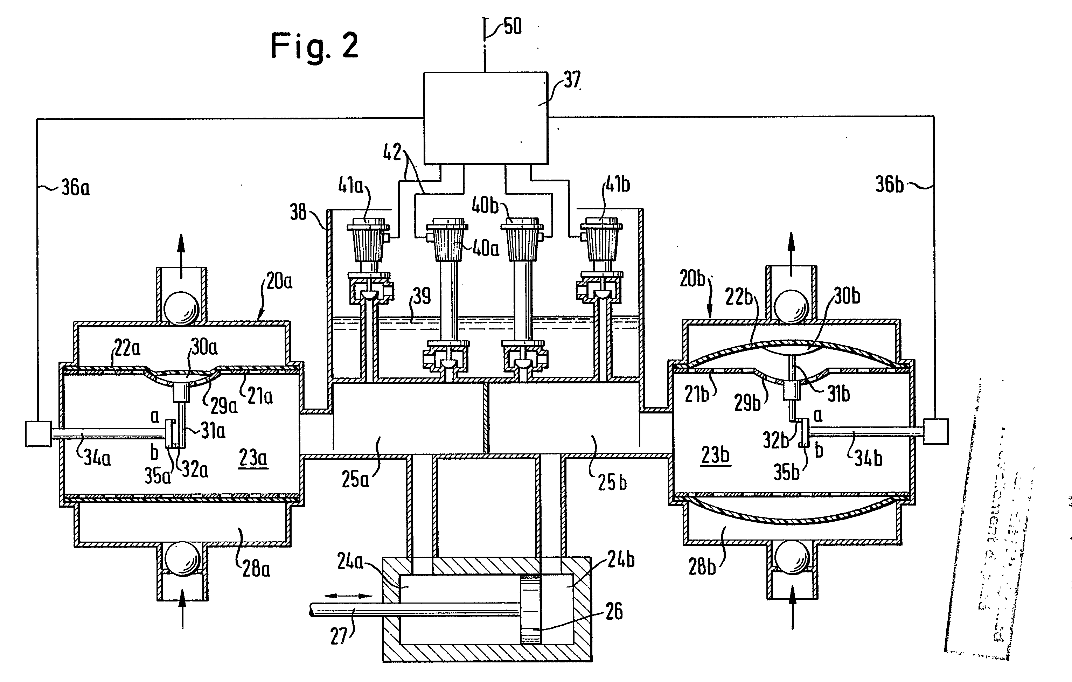

Bei der Ausführungsform nach Fig. 2 ist eine zweifach wirkende Kolbenmembranpumpe gezeigt mit zwei Gehäusen 20a, 20b, in denen ein flüssigkeitsdurchlässiges Rohr 21a, 21b angeordnet ist als Abstützung für eine zylindrische Membran 22a, 22b. Der Innenraum 23a bzw. 23b der Membran 22a, 22b ist mit jeweils einem Kolbenraum 24a bzw. 24b über eine geeignete Leitung 25a bzw. 25b verbunden. Der Kolben 26 wird über eine Kolbenstange 27 von einem geeigneten nicht gezeigten Antrieb oszillierend angetrieben. Die Membranräume 23a bzw. 23b sind daher abwechselnd einem Saug-bzw. Druckhub des Kolbens 26 ausgesetzt. Im gezeigten Fall ist für die Membran 22b der Druckhub beendet und für die Membran 22a der Saughub. Der äußere Membranraum 28a, 28b ist über geeignete Ventilanordnungen (nicht näher bezeichnet) mit einem Reservoir für zu verpumpendes Medium bzw. mit einem Verbraucher verbunden, der in Fig. 2 mit 5 bezeichnet ist.

Wie zu erkennen, weist das Rohr 21a, 21b eine Einwölbung 29a, 29b auf. Im Bereich der Einwölbung 29a, 29b ist über einen "Pilzkopf" 30a, 30b eine Stange 31a, 31b an der Innenseite der Membran 22a, 22b geführt, die am freien Ende einen Initiator 32a, 32b trägt. Wie erkennbar, ist der Pilzkopf 30a, 30b innerhalb der Einwölbung 29a, 29b am Ende des Saughubs. In den inneren Membranraum 23a, 23b hinein erstreckt sich ein Rohr 34a, 34b, das an seinem freien Ende einen Wegaufnehmer 35a, 35b aufweist. Der Weg aufnehmer 35a, 35b ist elektrisch arbeitend und kann zum Beispiel ein Hall-Generator sein. Es sind jedoch auch andere elektrische Wegaufnehmer denkbar. Nicht gezeigte Signalleitungen von dem Wegaufnehmer 35a, 35b erstrecken sich durch das Rohr 34 nach außen und führen über die Leitung 36a, 36b zu einer Steuereinheit 37.

Ein Vorratsbehälter 38 enthält Steuerflüssigkeit 39, die mit Hilfe von Elektromagnetventilen oder Regelventilen 40a, 40b dem Steuerflüssigkeitssystem der Membranpumpen 20a, 20b zugeführt werden kann bzw. von diesem entnommen werden kann. Weitere Elektromagnetventile 41a, 41b dienen zur wahlweisen Entfernung bzw. dem wahlweisen Einbringen von Luft in die Systeme. Zu diesem Zweck sind die Ventilsitze der Ventile 41a, 41b oberhalb des Niveaus der Flüs40a, 40b in die Flüssigkeit 39 eingetaucht sind. Die Ventile 40a, 40b, 41a, 41b sind über Steuerleitungen 42 mit der Steuereinheit 37 verbunden.

Nachfolgend sollen einige Betriebsarten erläutert werden.

Die Wegabnehmer 35a, 35b erfassen die Hubbewegungen der Membran 22a, 22b. Dies kann analog erfolgen, so daß über die Leitungen 36a, 36b ein Analogsignal auf die Steuer einheit 37 gegeben wird. Unabhängig davon können die Endlagen der Aufnehmer a bzw. b erfaßt werden, welche charakteristisch sind für eine vorgegebene maximale Auslenkung der Membran bzw. der Beendigung der Auslenkung bzw. Anlage an das Rohr 21a, 21b. Mithin wird die Membranbewegung in den Endpunkten a und b erfaßt und auf die Steuereinheit 37 übertragen. Aufgrund der erhaltenen Signale bzw. Impulse kann durch entsprechendes Öffnen und Schließen der Ventile 40a, 40b, 41a, 41b die Fördercharakteristik konstant gehalten oder durch zusätzliche Druckimpulseingabe eines Verbrauchers 5 druckabhängig variiert werden.

Bei konstanter Fördercharakteristik (Transportbetrieb) muß ein Ausgleich von Steuerflüssigkeitsverlusten bzw. von Steuerflüssigkeitsüberschüssen vorgenommen werden. Für den ersteren Fall wird im Wegaufnehmer 35a bei Annäherung an die Position b ein Impuls für die Steuereinheit 37 erzeugt, der das Ventil 40a veranlaßt zu öffnen. Solange das Ventil 40a geöffnet ist, strömt Steuerflüssigkeit aus dem Behälter 38 nach, bis der Kolben die Endlage erreicht hat. Mit Erreichen der Endlage des Kolbens wird das Steuerventil 40a geschlossen.

Kurz vor Beendigung des Druckhubes in Position a erzeugt der Wegaufnehmer 35b einen Impuls für die Steuereinheit 37, die somit das Ventil 40b öffnet. Über das Ventil 40b strömt überschüssige Steuerflüssigkeit in den Behälter 38. Das Ventil 40b bleibt bis zum Erreichen der Endlage des Kolbens 26.

Eine Überwachung der Membran 22a bzw. 22b auf Überdehnung kann zum Beispiel in der Weise erfolgen, daß ein Alarmsignal gegeben wird, wenn die Position a erreicht wird, bevor der Kolben 26 seinen Druckhub beendet hat. Ein derartiges Signal kann durch geeignete, nicht gezeigte Anzeigevorrichtungen wiedergegeben werden.

Arbeitet die zweiseitig wirkende Kolbenmembranpumpe nach Fig. 2 auf einen Verbraucher mit unterschiedlichem Gegendruck (z.B. Filterpresse; Verbraucher 5), erfolgt eine beliebige druckabhängige Veränderung des Förderns bei konstantem Antrieb des Kolbens 26 durch allmählichen Austausch der Steuerflüssigkeit 39 gegen Luft. Entsprechend dem gewünschten Druckverlauf wird das Ventil 40a, 40b bei Erreichen eines bestimmten Druckes geöffnet, so daß Förderflüssigkeit entweicht und das Ventil wieder schließt bei entsprechendem Druckabfall. Der Druck wird auf nicht weiter dargestellte Art und Weise vom Verbraucher 5 auf die Steuereinheit 37 gegeben. Ein Luftaustausch geschieht durch Öffnen des Ventils 41a, 41b kurz vor Position b und dauert bis zum Erreichen der Endlage des Kolbens 26. Die Förderung beginnt wieder, wenn durch Öffnen des Ventils 40a, 40b für eine bestimmte Zeit die Pumpe wieder entlüftet ist.

Bei der zuletzt beschriebenen Fördercharakteristik wird die Steuerflüssigkeit, die zwischen dem Kolben 26 und der Membran 21a bzw. 21b wirkt, entsprechend dem Öffnen der Ventile in der Menge verändert, so daß auch die geförderte Menge sich ändert, um eine entsprechende Anpassung an den Verbraucher zu erhalten.

## Ansprüche

1. Vorrichtung zur Steuerung des Hydraulikkreises einer Kolbenmembranpumpe, die mindestens eine Pumpenmembran aufweist, die abwechselnd dem Druck- oder dem Saughub eines motorisch angetriebenen Kolbens ausgesetzt ist, mit einer Steuereinheit, die in Abhängigkeit von einer Leistungsanforderung oder dergleichen die Menge der vom Kolben verdrängten Hydraulikflüssigkeit ändert, dadurch gekennzeichnet, daß der Membran (4; 22a, 22b) auf der dem Hydraulikmedium zugekehrten Seite ein Wegaufnehmer (3; 35a, 35b) zugeordnet ist, der den Hubweg der Membran mißt und ein dem Hubweg entsprechendes Hubsignal erzeugt, das auf die Steuereinheit (37) gegeben wird, die Steuereinheit (37) einen Speicher aufweist zur Speicherung vorgegebener Hubwerte und/oder Hubwertbereiche für vorgegebene hydraulische Leistungen der Pumpe (20a, 20b), die Steuereinheit (37) das Hubwegsignal mit den vorgegebenen Hubwerten bzw. Hubwertbereichen (Sollwert bzw. Sollwertbereiche) vergleicht und ein Steuersignal erzeugt, wenn es für die vorgegebene Leistung von dem Sollwert bzw. Sollwertbereich abweicht und die Steuereinheit (37) nach Maßgabe des Steuersignals die Menge des Hydraulikmediums pro Zeiteinheit ändert und/oder ein Alarmsignal erzeugt.

2. Vorrichtung nach Anspruch 1, dadurch gekennzeichnet, daß die Menge des Hydraulikmediums so geändert wird, daß der Membranhub konstant bleibt.

3. Vorrichtung nach Anspruch 1, dadurch gekennzeichnet, daß die Menge des Hydraulikmediums in Abhängigkeit von einem Gegendruck am Arbeitsausgang der Kolbenmembranpumpe (20a, 20b) oder nach Maßgabe einer vorgegebenen Kennlinie verändert wird.

4. Vorrichtung nach Anspruch 1, dadurch gekennzeichnet, daß die Steuereinheit ein Alarmsignal abgibt, wenn der Hubweg einen maximalen Wert erreicht.

5. Vorrichtung nach einem der Ansprüche 1 bis 4, dadurch gekennzeichnet, daß ein Vorratsbehälter (38) oder ein geschlossener Druckspeicher für das Hydraulikmedium vorgesehen ist, der Vorratsbehälter (38) oder der Druckspeicher über steuerbare Ventile (40a, 40b, 41a, 41b) mit dem Hydraulikkreislauf (25a, 25b) verbunden ist und die Steuereinheit (37) die Ventile (40a, 40b, 41a, 41b) nach Maßgabe des Steuersignals im Takt des Kolbens (26) für einen begrenzten Zeitraum bzw. in Abhängigkeit vom Hubweg der Membran (22a, 22b) öffnet.

6. Vorrichtung nach Anspruch 5, dadurch gekennzeichnet, daß die Pumpe (20a, 20b) zwei Ventile (40a, 41a; 40b,41b) aufweist, von denen eines mit seinem Ventilsitz in das Hydraulikmedium (39) eingetaucht ist und das andere mit seinem Ventilsitz oberhalb des Niveaus des Hydraulikmediums angeordnet ist.

7. Vorrichtung nach einem der Ansprüche 1 bis 6, dadurch gekennzeichnet, daß ein elektrischer Wegaufnehmer (3; 35a, 35b) vorgesehen ist, dem ein mit der Membran (4; 22a, 22b) verbundener Initiator (5; 32a, 32b) zugeordnet ist.

8. Vorrichtung nach Anspruch 7, dadurch gekennzeichnet, daß der elektrische Wegaufnehmer (5; 35a, 35b) an einer stationären Halterung (2; 34a, 34b) angeordnet ist, auf einer flüssigkeitsdurchlässigen Anlagewand (4a; 21a, 21b) für die Membran (4; 22a, 22b) eine Hülse (9) angebracht ist, in der der Näherungsinitiator angeordnet und an einem vorzugsweise mittels einer Feder vorgespannten Bolzen befestigt ist, der über eine Bohrung in der Wand mit der Membran verbunden ist.

9. Vorrichtung nach Anspruch 7 oder 8, dadurch gekennzeichnet, daß die Anlagewand (21a, 21b) im Bereich der Be festigung des Näherungsinitiators eine Einwölbung (29a, 29b) aufweist zur Aufnahme der Befestigungsteile (30a, 30b).

10. Vorrichtung nach Anspruch 8 oder 9, dadurch gekennzeichnet, daß die Halterung von einem rohrähnlichen Gehäuse (2; 34a, 34b) gebildet ist, in dem der Wegaufnehmer (3; 35a, 35b) angeordnet ist und durch das die elektrische Zuleitung für den Wegaufnehmer nach außerhalb des Membrangehäuses (20a, 20b) geführt ist.

11. Vorrichtung nach einem der Ansprüche 6 bis 10, dadurch gekennzeichnet, daß der Wegaufnehmer ein Hall-Generator ist und der Initiator ein Magnet.

# Fig. 1

Fig. 2

| EINSCHLÄGIGE DOKUMENTE | | | EP 89102364.0 |
|---|---|---|---|

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| P,X | DE - A1 - 3 706 338 (WAGNER) <br> * Gesamt * <br> -- | 1-8,11 | F 04 B 43/06 |
| A | SOVIET INVENTIONS ILLUSTRATED, Sektion P,Q, Woche 8416, 30. Mai 1984 <br> DERWENT PUBLICATIONS LTD., London, Q 56 <br> * SU-1028-882-A (MEKH=) * <br> -- | 1-11 | |
| A | CH - A5 - 634 129 (WILMS) <br> * Gesamt * <br> -- | 1,2 | |
| A | US - A - 3 906 793 (WURZBACHER) <br> * Gesamt * <br> ---- | 1-11 | |

| RECHERCHIERTE SACHGEBIETE (Int. Cl.4) |
|---|
| F 04 B 9/00 |
| F 04 B 43/00 |
| F 04 B 45/00 |
| F 04 B 49/00 |
| G 01 B 7/00 |
| G 01 F 11/00 |

Der vorliegende Recherchenbericht wurde für alle Patentansprüche erstellt.

| Recherchenort | Abschlußdatum der Recherche | Prüfer |
|---|---|---|
| WIEN | 10-05-1989 | WERDECKER |